# FASCICULE DE BREVET EUROPEEN

(11) **EP 1 197 363 B1**
(45) Date de publication et mention de la délivrance du brevet: **01.12.2004**
(21) Numéro de dépôt: 01123565.2
(22) Date de dépôt: 01.10.2001
(51) Int. Cl.: B60G 17/015, B60G 17/02

(54) **Dispositif de suspension comportant un correcteur d'assiette**
Aufhängungssystem mit einer Niveauregeleinrichtung
Suspension system with a level control device

(30) Priorité: 11.10.2000 FR 0013105
(43) Date de publication de la demande: 17.04.2002
(73) Titulaire: Conception et Développement Michelin S.A., 1762 Givisiez (CH)
(72) Inventeur: Charaudeau, Jean-Jaques, 1741 Cottens (CH); Laurent, Daniel, 1723 Marly (CH); Linda, Jean-Louis, 1635 La Tour de Treme (CH); Varenne, Pierre, 1470 Neyruz (CH)
(74) Mandataire: Bauvir, Jacques

(56) Documents cités:
- EP-A- 0 354 113
- EP-A- 0 878 333
- US-A- 5 091 679
- US-A- 5 719 790

## Description

La présente invention concerne le domaine des suspensions de véhicules terrestres, et plus précisément les moyens utilisés pour combattre le roulis ou le tangage. Dans une application particulière, elle se rapporte à la suspension des voitures de tourisme. Une suspension selon le préambule de la revendication 1 est connue de EP 0 878 333.

On sait que la suspension d'un véhicule comporte des dispositions constructives par lesquelles on guide le déplacement d'une roue ou des roues d'un essieu par rapport à la caisse (ou par rapport au châssis si le véhicule en est pourvu, ou encore entre caisse et châssis le cas échéant), et elle comporte des moyens contrôlant le débattement de chaque roue (une roue est un organe dit « non suspendu ») par rapport à la caisse (tout point situé sur la caisse est dit « suspendu »), pour porter la charge tout en maintenant une certaine garde au sol du véhicule (c'est la fonction d'un ressort) et comporte des moyens pour empêcher l'entretien des oscillations survenant entre points suspendu et non suspendu à la suite d'une perturbation (c'est la fonction d'un amortisseur).

On sait que la conception d'une suspension se caractérise par la recherche d'un compromis entre des objectifs qui ont la réputation d'être au moins dans une large mesure contradictoires : le confort et la tenue de route. De nombreux efforts sont déployés pour trouver un compromis toujours meilleur. L'état de la technique connaît des suspensions dites actives ou semi-actives, dont le pilotage est maintenant rendu possible par les progrès de l'électronique. Dans de telles suspensions, des ordres sont transmis par voie électrique ou électro-hydraulique pour modifier en temps réel les caractéristiques de flexibilité et/ou d'amortissement de la suspension. Cela conduit à ajouter, aux dispositifs mécaniques ou pneumatiques ou hydrauliques classiques, un étage de régulation électronique avec ses capteurs et ses moyens de calcul, et des électrovannes ou des servovalves, pour transmettre aux organes mécaniques assurant la fonction de suspension proprement dite les ordres de changement de caractéristiques. Il s'agit par exemple de provoquer l'ouverture ou la fermeture d'un clapet dans un amortisseur, pour modifier la dissipation d'énergie qu'il provoque.

Il existe aussi dans la plupart des suspensions pour véhicules de tourisme, poids lourds et cars de transport de passagers, des moyens spécifiques pour lutter contre la prise de roulis de la caisse (ou du châssis) sous l'effet de forces centrifuges. On appelle " roulis " l'inclinaison de la caisse du véhicule autour d'un axe horizontal compris dans un plan longitudinal et vertical de symétrie du véhicule. Une prise de roulis trop importante nuit au confort des passagers et peut même, selon les moyens de guidage de la roue utilisés, être préjudiciable au travail des pneumatiques lorsque le carrossage du pneu par rapport au sol est influencé par le roulis de la caisse. C'est typiquement le cas pour une suspension à doubles triangles superposés très répandue dans les véhicules de tourisme. La prise de roulis influence alors les sollicitations que subit ledit pneu et la position plus ou moins favorable dans laquelle il se trouve pour transmettre des efforts, notamment des efforts dans le sens transversal. Or on sait que ces efforts sont de première importance pour le guidage du véhicule, donc pour la sécurité.

Le moyen le plus couramment employé pour combattre ce roulis consiste à utiliser une barre antiroulis, en général une barre antiroulis par essieu. Malheureusement, une barre antiroulis ne peut que limiter le roulis, en opposant à celui-ci un couple de réaction. Par principe, elle ne peut empêcher la prise de roulis, donc elle ne peut empêcher l'inclinaison des roues dans un sens défavorable au bon fonctionnement des pneus. En outre, on sait qu'une barre antiroulis raidit inutilement la suspension en ligne droite, car elle s'oppose aux débattements de suspension non identiques des roues d'un essieu reliées par une telle barre. Ce n'est qu'en débattement vertical pure que la barre antiroulis n'intervient pas.

Par la demande de brevet WO 99/67100, on connaît déjà une proposition qui décrit un contrôle de roulis actif, réalisée au moyen d'une barre antiroulis comportant un moteur électrique destiné à lui imposer une précharge dans le sens voulu. Cette solution est cependant limitée au contrôle du roulis.

Le tangage d'un véhicule (cabrage à l'accélération, plongée au freinage) pose des problèmes comparables à ceux posés par le roulis. On lutte en général contre le tangage par des épures de suspensions adaptées pour que les transferts longitudinaux de charges ne sollicitent que partiellement les ressorts, mais ceci est un palliatif qui n'est pas sans inconvénients. On désigne ci-dessous le roulis et le tangage indistinctement par " variation d'assiette ". Une variation d'assiette englobe, dans le présent mémoire, une variation de la garde au sol et aussi toute inclinaison par rapport au sol d'un plan de référence lié à la masse non suspendue du véhicule.

On connaît aussi de multiples propositions de suspensions actives, comme celles décrites dans les brevets ou demandes de brevet US 5,060,959, US 5,028,073, US 5,066,041, US 5,740,039 ou EP 0 878 333, pour n'en citer que quelques-unes. La diversité des dispositions constructives et des lois de pilotage proposées, à rapprocher du très petit nombre de suspensions actives sur le marché, est à l'image de la difficulté qu'il y a à piloter efficacement les suspensions. L'état de la technique se heurte au choix des paramètres de pilotage, à la correcte exploitation d'une multitude de signaux dont on pense avoir besoin pour appréhender correctement l'attitude d'un véhicule.

L'objectif de l'invention consiste à procurer un haut niveau de sécurité de fonctionnement des véhicules et un grand confort.

L'invention propose une suspension d'un véhicule comportant au moins deux liaisons au sol reliant chacune une masse non suspendue comprenant une roue à une masse suspendue avec débattement vertical possible, chaque liaison au sol comportant un ressort et un vérin électrique réversible agissant en parallèle du ressort, la suspension comportant des moyens pour évaluer une sollicitation non verticale appliquée à la masse suspendue et susceptible de provoquer une variation d'assiette de la masse suspendue, la suspension comportant des moyens de pilotage de chacun des vérins électriques de chacune desdites liaisons au sol pour qu'ils développent chacun un effort consistant en l'addition de deux composantes exclusivement: une composante d'amortissement s'opposant à la vitesse de débattement et déterminée individuellement pour chaque liaison au sol à laquelle appartient le vérin électrique considéré et une composante de correction d'assiette déterminée de façon centralisé par un pilotage concernant globalement le véhicule.

Ainsi, par la simple programmation des seules deux composantes indiquées ci-dessus, dont l'une est une composante dissipative d'amortissement, on peut piloter l'effort dans le vérin électrique de façon à obtenir une suspension sûre et assez confortable. La présente proposition n'a pas recours à des moyens plus complexes comme proposé dans la demande de brevet EP 0 878 333, dans laquelle un pilotage en suiveur de profil est proposé, accompagné dans un mode de réalisation par une détection de la survenance d'une résonance du pneu pour introduire un amortissement.

Un exemple intéressant d'utilisation de l'invention concerne une correction d'assiette commandée par des moyens pour évaluer une sollicitation non verticale appliquée à la masse suspendue et susceptible de provoquer une variation d'assiette de la masse suspendue. La suite de la description concerne essentiellement le roulis, car cela suffit à bien faire comprendre l'invention. Lesdites au moins deux liaisons au sol forment un essieu et sont montées de part et d'autre du plan médian de symétrie du véhicule, de sorte que ledit couple de correction d'assiette s'oppose au roulis. Ce n'est cependant pas limitatif. Tout ce qui est dit à propos du roulis peut être développé à propos du tangage. L'invention peut s'appliquer à un bicycle comme une moto. On peut utiliser les moyens proposés pour lutter contre l'un ou l'autre ou l'un et l'autre de ces phénomènes. L'invention s'étend donc au cas où lesdites au moins deux liaisons au sol comportent une liaison au sol avant et une liaison au sol arrière, de sorte que ledit couple de correction d'assiette s'oppose au tangage, et en particulier au cas où le véhicule comportant au moins quatre liaisons au sol formant un essieu avant et un essieu arrière, dans lequel ledit couple de correction d'assiette s'oppose à la fois au roulis et au tangage.

Bien entendu, si l'on compense à la fois le roulis et le tangage, chacune desdites liaisons au sol est susceptible de recevoir des moyens de pilotage des vérins électriques une consigne d'effort qui est la résultante d'une contribution pour la correction du roulis et d'une contribution pour la correction du tangage. Pour chaque vérin électrique, la composante globale de correction d'assiette est la somme algébrique d'une contribution relative au roulis et d'une contribution relative au tangage. En cas de roulis pur (pas de tangage) ou de tangage pur (pas de roulis), les composantes de correction sont de valeur absolue égales et sont orientées en sens opposés l'une de l'autre d'un côté et de l'autre du véhicule, c'est à dire du côté gauche et du côté droit en ce qui concerne le roulis, et à l'avant et à l'arrière en ce qui concerne le tangage.

L'invention propose une approche qui, ayant observé que le contrôle du roulis est déterminant à la fois pour l'impression de confort et de sécurité ressentie par les passagers et pour le bon fonctionnement des pneumatiques, utilise un ressort (mécanique ou pneumatique) et un vérin électrique réversible agissant en parallèle du ressort comme éléments assurant le contrôle du débattement d'une liaison au sol. Les vérins électriques de certaines liaisons au sol et de préférence de toutes les liaisons au sol du véhicule sont pilotés pour compenser au moins partiellement le roulis ou le tangage, tout en procurant la possibilité d'introduire un amortissement variable. En outre, soulignons qu'il peut être intéressant de sur-compenser l'un ou l'autre des phénomènes de variation d'assiette. On peut par exemple sur-compenser roulis en virage, c'est à dire de provoquer une inclinaison de la caisse vers l'intérieur du virage, fût-ce seulement d'un angle assez limité.

Selon une forme de réalisation préférée, l'invention utilise un ressort classique, par exemple un ressort hélicoïdal, dimensionné et implanté pour reprendre la charge statique d'un véhicule et offrir une garde au sol prédéterminée. La valeur de sa flexibilité selon le débattement est constante ou variable.

On sait que, dans le cas de suspensions très souples conçues pour favoriser le confort, on subit en général un roulis et un tangage importants qui amènent les suspensions très souvent dans une zone de fonctionnement proche d'une butée de débattement. Dans l'art antérieur, on lutte contre ces phénomènes indésirables en agissant sur les épures de suspension pour lutter contre le tangage et en utilisant des barres antiroulis. Ici au contraire, on lutte contre ces phénomènes en assistant le ressort de chaque liaison au sol de façon appropriée. Ceci permet d'utiliser des ressorts de flexibilité bien plus grande, sans faire face aux inconvénients propres aux suspensions trop souples.

On a indiqué ci-dessus que le contrôle de l'assiette peut aussi englober le contrôle de la garde au sol, par exemple pour obtenir une garde au sol constante quelle que soit la charge statique du véhicule. Comme déjà indiqué dans la demande de brevet EP 0 878 333, pour apporter une correction de hauteur, il faut accepter de consommer en permanence de l'énergie pour que la fraction de la charge excédant le poids mort du véhicule soit supportée par le vérin électrique. En effet, cela suppose qu'une fraction de la composante de correction d'assiette s'oppose en permanence à ladite charge excédant le poids mort, ce qui n'est pas incompatible avec le principe selon l'invention, mais nécessite l'établissement d'une composante constante de courant dans les vérins électriques. Il parait cependant préférable de se passer de correction de hauteur, ou de réserver la fonction correction de hauteur à un autre dispositif que ledit vérin électrique, cet autre dispositif agissant avec une grande constante de temps, et ne consommant de l'énergie que pendant la phase de correction.

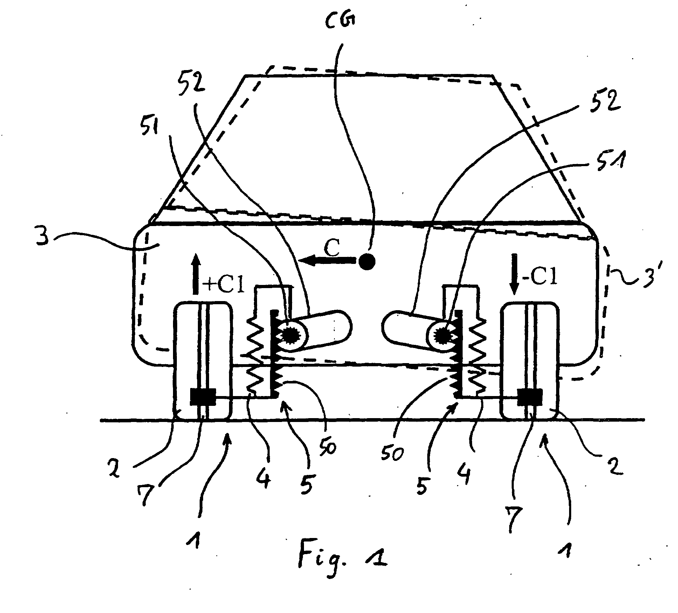

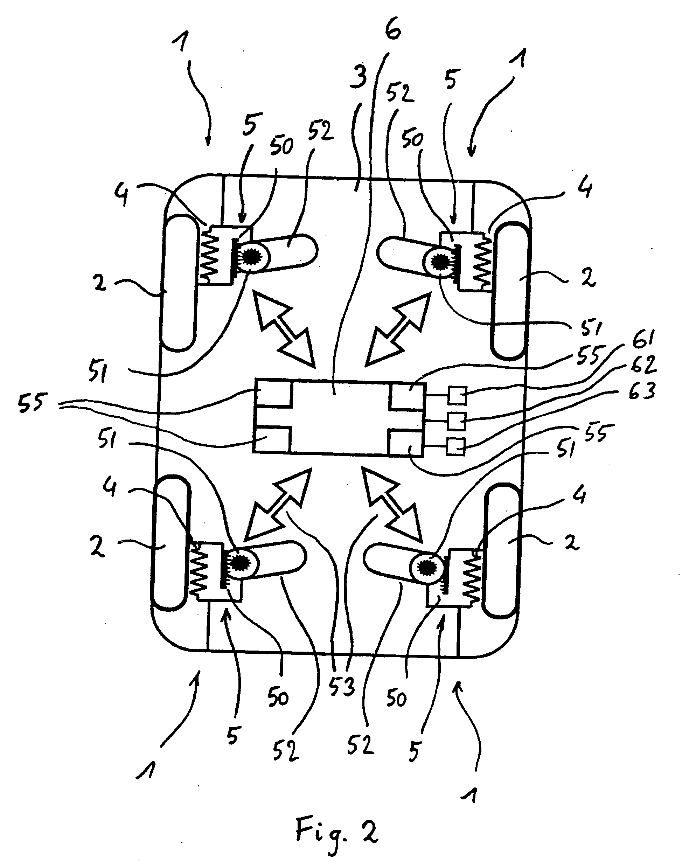

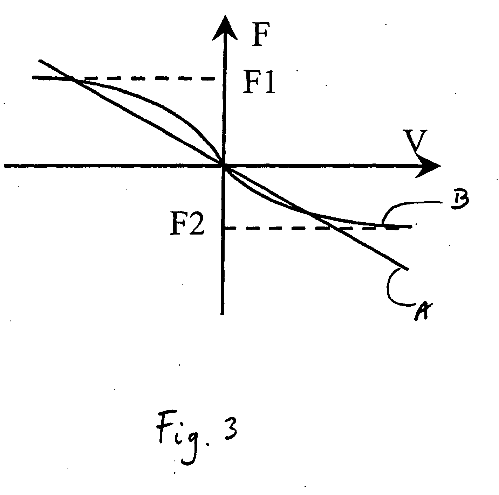

L'invention sera mieux comprise par la description qui va suivre, d'un exemple donné à titre non limitatif, en se référant au dessin annexé sur lequel :
■ la figure 1 montre un véhicule équipé d'une suspension selon l'invention,
■ la figure 2 est un schéma d'implantation sur un véhicule des principaux éléments de l'invention,
■ la figure 3 est un diagramme donnant deux exemples de loi d'amortissement.

On voit à la figure 1 en vue de face un véhicule de tourisme à quatre roues, équipé de liaisons élastiques 1 montées entre les roues 2, faisant partie de la masse non suspendue, et la caisse 3, faisant partie de la masse suspendue. On voit à la figure 2 les quatre liaisons élastiques 1 montées entre les roues 2 et la caisse 3 du véhicule. Chaque liaison élastique comporte une coulisse verticale 7, un ressort hélicoïdal 4 et un vérin électrique 5 monté en parallèle. Le vérin électrique 5 comporte une crémaillère 50 solidaire de la partie non suspendue de la liaison au sol. Un moteur électrique 52 est fixé par sa carcasse à la partie suspendue de la liaison au sol. Un pignon 51 est monté sur le rotor du moteur et est engrené sur la crémaillère 50. Pour plus de détails sur une construction possible comportant un guidage du plan de roue par une coulisse verticale 7, on consultera la demande de brevet EP 0 878 332. Bien entendu, d'autres principes de liaison d'un ensemble roulant à une caisse peuvent être adoptés et sont compatibles avec l'utilisation d'un vérin électrique et d'un ressort montés en parallèle.

La caisse 3 représentée en traits continus ne subit pas de roulis. C'est son allure naturelle en roulage en ligne droite. Notons que le centre de roulis de la caisse est situé sous le centre de gravité CG pour une telle suspension. S'il apparaît une force centrifuge C agissant au centre de gravité CG, en dehors de toute correction active, la caisse s'inclinera vers l'extérieur du virage, d'un angle de roulis dépendant de la force centrifuge et de la flexibilité des suspensions (non représenté).

Le dispositif de suspension selon l'invention comporte des moyens pour évaluer une telle sollicitation, non verticale et orientée parallèlement à la droite joignant les centres des aires de contact sur le sol des roues considérées, ici appartenant à un essieu puisque l'on expose le cas du roulis. On s'oppose à ce phénomène en développant dans les vérins électriques 5 une composante de correction +C₁ à l'extérieur du virage et -C₁ à l'intérieur du virage. En jouant sur l'amplitude de cette correction, on peut limiter l'angle de roulis, ou même le sur-compenser comme montré par la caisse 3' représentée en traits interrompus à la figure 1.

On sait que, pour obtenir un effort donné dans un vérin électrique 5 tel que décrit ci-dessus, il faut que le moteur développe un couple déterminé. Le pilotage pour obtenir un effort déterminé dans le vérin électrique 5 revient donc à asservir le couple du moteur. A cette fin, pour chaque liaison au sol, un pilotage individuel est assuré par une unité de pilotage 55 permettant de créer dans ledit vérin électrique 5 un effort ayant au moins une composante d'amortissement s'opposant au mouvement de débattement (dont le fonctionnement sera expliqué plus loin) et une composante de correction d'assiette, non nulle lorsque nécessaire. Le pilotage des composantes de correction d'assiette est centralisé : il concerne globalement l'équilibre du véhicule. Il est assuré par une unité centrale 6. De préférence, pour un véhicule à quatre roues au moins, l'unité centrale 6 assure au moins une correction du roulis. Avantageusement, l'unité centrale 6 peut assurer ou assure en outre une correction de tangage du véhicule.

Poursuivons sur l'exemple du roulis. Lesdites composantes de correction du roulis sont de valeur absolue égales et étant orientées en sens opposés l'une de l'autre dans chaque essieu, afin d'appliquer à la caisse 3 un couple d'antiroulis. Le roulis peut être compensé partiellement (dépense d'énergie moindre), ou totalement (meilleur confort, meilleur fonctionnement des pneus), ou même peut être sur-compensé comme évoqué ci-dessus pour améliorer plus radicalement encore le fonctionnement d'un véhicule comme une voiture de tourisme à quatre roues. Plus la compensation est importante, plus il faut être capable de développer un couple important dans les moteurs 52, et de le maintenir le temps que durent les sollicitations transversales (ou longitudinales), celles-ci étant bien plus longues que les sollicitations venant du caractère bosselé de la route, appelant la composante d'amortissement dont on parlera ci-dessous.

On peut à cette fin utiliser des capteurs 61, 62, 63 comme par exemple des accéléromètres liés à la caisse pour évaluer une sollicitation non verticale. Il peut s'agir de l'accélération transversale et/ou de la vitesse de lacet (ayant le roulis pour conséquence). On peut aussi évaluer l'accélération longitudinale (ayant le tangage pour conséquence). Cette ou ces évaluations permettent de développer un ou des couples de correction d'assiette appropriés.

En variante, on peut utiliser des capteurs permettant d'évaluer des paramètres indicateurs des conditions de conduite du véhicule. C'est par exemple un capteur d'angle au volant, de pression des freins, d'action sur l'accélérateur, et un capteur de vitesse du véhicule. Cela peut permettre d'anticiper par rapport à l'instant auquel apparaissent des accélérations parallèles au sol (accélération transversale, longitudinale). On peut dans ce cas utiliser des stratégies de pilotage observant celles des actions du pilote, estimant les conséquences probables sur le roulis (et sur le tangage), et on détermine la correction d'assiette appropriée.

Il est bien entendu possible de provoquer une variation d'assiette de la masse suspendue en réponse à n'importe quel type de commande. Par exemple, même en l'absence d'accélération longitudinale appliquée à la caisse, on peut piloter les moyens de commande de façon à ce qu'un couple sur-compensant une accélération transversale soit accompagné d'une légère plongée volontaire du véhicule. Cet exemple n'est cité que pour faire comprendre qu'il existe une infinité de contrôles actifs possible.

De façon avantageuse, l'invention permet aussi de piloter en temps réel et très aisément la répartition entre l'essieu avant et l'essieu arrière desdites composantes de correction du roulis. Etant donné un couple global d'antiroulis agissant sur la caisse, plus la part de correction de roulis fournie par l'essieu arrière est importante, plus le véhicule tendra vers un comportement survireur, et inversement. On peut vaincre l'inertie de lacet du véhicule, par exemple en entrée de virage, en adoptant très fugitivement une part d'antiroulis plus grande à l'arrière, et ensuite on peut stabiliser la trajectoire du véhicule en lui conférant un caractère plus sous vireur par une part d'antiroulis devenant plus grande à l'avant. En comparant la trajectoire du véhicule souhaitée par le pilote à la trajectoire effective du véhicule, à la manière des dispositifs de stabilisation connus sous la désignation d' " ESP ", on peut obtenir un effet de stabilisation en agissant de façon dynamique sur la répartition de couple de correction de roulis entre l'avant et l'arrière du véhicule. De même, la correction en tangage d'une caisse de véhicule de tourisme à 4 roues dépend d'un couple de correction de tangage global, et l'on peut répartir de part et d'autre du plan de symétrie du véhicule, éventuellement par un pilotage en temps réel, les composantes de correction agissant sur le tangage.

Passons maintenant à la composante d'amortissement. Celle-ci a pour objectif d'empêcher l'entretien d'oscillations de la suspension. Il convient donc d'observer, individuellement pour chaque roue, le débattement de la suspension. Dans une variante tout particulièrement intéressante, on utilise un moteur électrique 52 de type synchrone auto piloté, à aimants permanents. Ce type de moteur comporte par construction des capteurs de position du rotor utilisés pour en assurer le pilotage, quelle que soit l'application. Ils peuvent être utilisés pour mesurer la variation de distance entre la roue 2 et la caisse 3. L'information venant des capteurs internes au moteur parvient à une unité 55 de pilotage individuel de roue, via un canal 53, ce qui permet l'asservissement du moteur 52 en couple. L'unité 55 comporte les moyens électroniques pour exploiter l'information venant desdits capteurs internes au moteur afin d'assurer un amortissement convenable. Bien entendu, on pourrait aussi utiliser des capteurs externes au moteur électrique 52 pour piloter l'amortissement.

On peut implanter une loi d'amortissement appropriée dans l'unité 55 de pilotage individuel de roue. A la figure 3, on voit une loi linéaire A dans la quelle la composante d'amortissement F développée par le vérin électrique 5 est proportionnelle à la vitesse V de débattement vertical de la roue 2 par rapport à la caisse 3 (et fonction de son signe). On voit aussi une autre loi B dans laquelle la composante d'amortissement F est une fonction non proportionnelle de la vitesse V (et fonction de son signe), atteignant des seuils F₁ et F₂, et que les seuils ne sont pas les mêmes en compression et en détente. Il est souvent difficile de réaliser une loi d'amortissement désirable telle que la loi B avec les amortisseurs hydrauliques classiques. Dans le cas de la présente invention, l'asservissement des vérins électriques 5 peut être programmé selon n'importe quelle loi sans difficulté particulière, pourvu que l'on développe un effort qui s'oppose au mouvement.

On peut aussi adapter la composante d'amortissement F en fonction de paramètres indicateurs des conditions de conduite du véhicule. Par exemple, la composante d'amortissement F est d'autant plus forte que le véhicule roule vite. Par exemple, la composante d'amortissement F tient compte des observations historiques sur la conduite du véhicule : la composante d'amortissement F est d'autant plus forte que le conducteur a une conduite sportive, manifestée par des variations de sollicitations rapides sur les freins, l'accélérateur, et en braquage. Ou encore la composante d'amortissement F est choisie par le conducteur au tableau de bord du véhicule.

L'unité 55 recalcule en permanence ledit effort F à exercer, selon une période d'échantillonnage prédéterminée (par exemple toutes les millisecondes), pour développer la composante d'amortissement, pour développer la composante de correction d'assiette compte tenu bien entendu des demandes de correction d'assiette venant de l'unité centrale 6.

Notons au passage que la contribution de correction de tangage peut elle aussi se baser sur certaines observations caractéristiques de la conduite du véhicule, évoquées à propos de l'amortissement : pression de freinage et/ou vitesse d'augmentation de la pression de freinage, degré et/ou vitesse d'enfoncement de la pédale d'accélérateur.

Signalons enfin que, bien entendu, il est souhaitable que chaque vérin électrique puisse fonctionner en mode dégradé, en cas de panne de l'une ou l'autre des unités 55 et/ou de la centrale 6. On connecte dans ce cas les bornes d'alimentation de l'induit du moteur 52 par exemple en court circuit ou sur une résistance de dissipation adéquate, ce qui fait fonctionner le moteur 52 en générateur, avec dissipation d'énergie par effet joule dû à la circulation d'un courant.

## Revendications

1. Suspension d'un véhicule comportant au moins deux liaisons au sol (1) reliant chacune une masse non suspendue comprenant une roue (2) à une masse suspendue, avec débattement vertical possible, chaque liaison au sol comportant une suspension verticale réagissant aux variations de distance entre la masse suspendue et la masse non suspendue, ladite suspension verticale comprenant un ressort (4) et un vérin électrique réversible (5) agissant en parallèle du ressort, la suspension comportant des moyens pour commander une correction d'assiette, la suspension comportant des moyens de pilotage de chacun des vérins électriques de chacune desdites liaisons au sol pour qu'ils développent chacun un effort **caractérisé en ce que** chaque effort consiste en l'addition de deux composantes exclusivement: une composante d'amortissement s'opposant à la vitesse de débattement et déterminée individuellement pour chaque liaison au sol à laquelle appartient le vérin électrique considéré et une composante de correction d'assiette déterminée de façon centralisé par un pilotage concernant globalement le véhicule.

2. Suspension selon la revendication 1, dans lequel les moyens pour commander une correction d'assiette comportent des moyens pour évaluer une sollicitation non verticale appliquée à la masse suspendue et susceptible de provoquer une variation d'assiette du véhicule, et en ce que lesdites composantes de correction d'assiette appliquent un couple de correction d'assiette à la masse suspendue.

3. Suspension selon la revendication 2, dans lequel lesdites au moins deux liaisons au sol forment un essieu, lesdites liaisons au sol étant montées de part et d'autre du plan médian de symétrie du véhicule, de sorte que ledit couple de correction d'assiette s'oppose au roulis.

4. Suspension selon la revendication 2, dans lequel lesdites au moins deux liaisons au sol comportent une liaison au sol avant et une liaison au sol arrière, de sorte que ledit couple de correction d'assiette s'oppose au tangage.

5. Suspension selon la revendication 2, pour un véhicule comportant au moins quatre liaisons au sol formant un essieu avant et un essieu arrière, dans lequel ledit couple de correction d'assiette s'oppose à la fois au roulis et au tangage.

6. Suspension selon l'une des revendications 1 à 5 dans lequel la composante d'amortissement est pilotée en fonction de paramètres indicateurs des conditions de conduite du véhicule.

7. Suspension selon l'une des revendications 1 à 6, dans lequel le vérin électrique (5) comporte un moteur électrique (52) de type synchrone auto piloté, à aimants permanents.

8. Suspension selon la revendication 7 dans lequel les moyens de pilotage déterminent la variation de la position relative entre point suspendu et point non suspendu entièrement à partir d'une mesure de la variation de position délivrée par les capteurs intégrés au moteur électrique.

9. Suspension selon l'une des revendications 1 à 8 dans lequel les moyens pour évaluer une sollicitation non verticale comportent au moins un capteur choisi dans le groupe constitué par un capteur d'accélération transversale de ladite masse suspendue, un capteur de vitesse de lacet et un capteur d'accélération longitudinale de ladite masse suspendue.

10. Suspension selon l'une des revendications 1 à 9, pour un véhicule comportant au moins un essieu avant et un essieu arrière ayant chacun deux liaisons au sol montées de part et d'autre du plan médian de symétrie du véhicule, lesdits moyens de pilotage pilotant en temps réel la répartition entre l'essieu avant et l'essieu arrière desdites composantes de correction d'assiette s'opposant au roulis.

11. Suspension selon l'une des revendications 1 à 10, pour un véhicule comportant au moins un essieu avant et un essieu arrière ayant chacun deux liaisons au sol montées de part et d'autre du plan médian de symétrie du véhicule, lesdits moyens de pilotage pilotant en temps réel la répartition de part et d'autre du plan médian de symétrie du véhicule desdites composantes de correction agissant sur le tangage.

## Patentansprüche

1. Aufhängung eines Fahrzeugs, das mindestens zwei Bodenverbindungen (1) aufweist, die je eine ein Rad (2) aufweisende, nicht aufgehängte Masse mit einer aufgehängten Masse mit möglicher senkrechter Federung verbindet, wobei jede Bodenverbindung eine senkrechte Aufhängung aufweist, die auf die Abstandsveränderungen zwischen der aufgehängten Masse und der nicht aufgehängten Masse reagiert, wobei die senkrechte Aufhängung eine Feder (4) und einen umschaltbaren elektrischen Stellantrieb (5) aufweist, der parallel zur Feder wirkt, wobei die Aufhängung Mittel aufweist, um eine Lageregelung zu steuern, wobei die Aufhängung Mittel zur Steuerung jedes der elektrischen Stellantrieben jeder der Bodenverbindungen aufweist, damit sie je eine Kraft entwickeln, **dadurch gekennzeichnet, dass** jede Kraft exklusiv aus der Addition zweier Komponenten besteht: einer Dämpfungskomponente, die der Federungsgeschwindigkeit entgegenwirkt und individuell für jede Bodenverbindung bestimmt wird, zu der der betrachtete elektrische Stellantrieb gehört, und eine Lageregelungskomponente, die zentral von einer Steuerung bestimmt wird, die das Fahrzeug allgemein betrifft.

2. Aufhängung nach Anspruch 1, bei der die Mittel zur Steuerung einer Lageregelung Mittel aufweisen, um eine nicht senkrechte Beanspruchung auszuwerten, die auf die aufgehängte Masse ausgeübt wird und eine Lageveränderung des Fahrzeugs verursachen kann, und dass die Lageregelungskomponenten ein Lageregelungsmoment an die aufgehängte Masse anlegen.

3. Aufhängung nach Anspruch 2, bei der die mindestens zwei Bodenverbindungen eine Achse bilden, wobei die Bodenverbindungen zu beiden Seiten der Mittelsymmetrieebene des Fahrzeugs montiert sind, so dass das Lageregelungsmoment der Wankbewegung entgegenwirkt.

4. Aufhängung nach Anspruch 2, bei der die mindestens zwei Bodenverbindungen eine vordere Bodenverbindung und eine hintere Bodenverbindung aufweisen, so dass das Lageregelungsmoment der Nickbewegung entgegenwirkt.

5. Aufhängung nach Anspruch 2 für ein Fahrzeug, das mindestens vier Bodenverbindungen aufweist, die eine Vorderachse und eine Hinterachse bilden, wobei das Lageregelungsmoment sowohl der Wankbewegung als auch der Nickbewegung entgegenwirkt.

6. Aufhängung nach einem der Ansprüche 1 bis 5, bei der die Dämpfungskomponente in Abhängigkeit von die Fahrbedingungen des Fahrzeugs anzeigenden Parametern gesteuert wird.

7. Aufhängung nach einem der Ansprüche 1 bis 6, bei der der elektrische Stellantrieb (5) einen selbststeuernden Elektromotor (52) vom Typ Synchronmotor mit Dauermagneten aufweist.

8. Aufhängung nach Anspruch 7, bei der die Steuermittel die Veränderung der Position eines aufgehängten Punkts und eines nicht aufgehängten Punkts zueinander vollständig ausgehend von einer Messung der Positionsveränderung bestimmen, die von den in den Elektromotor integrierten Sensoren geliefert wird.

9. Aufhängung nach einem der Ansprüche 1 bis 8, bei der die Mittel zur Auswertung einer nicht senkrechten Beanspruchung mindestens einen Sensor aufweisen, der aus der Gruppe ausgewählt wird, die aus einem Querbeschleunigungssensor der aufgehängten Masse, einem Schlingergeschwindigkeitssensor und einem Längsbeschleunigungssensor der aufgehängten Masse ausgewählt wird.

10. Aufhängung nach einem der Ansprüche 1 bis 9 für ein Fahrzeug, das mindestens eine Vorderachse und eine Hinterachse aufweist, die je zwei Bodenverbindungen aufweisen, welche zu beiden Seiten der Mittelsymmetrieebene des Fahrzeugs montiert sind, wobei die Steuermittel die Verteilung der dem Wanken entgegenwirkenden Lageregelungskomponenten zwischen der Vorderachse und der Hinterachse in Echtzeit steuern.

11. Aufhängung nach einem der Ansprüche 1 bis 10 für ein Fahrzeug, das mindestens eine Vorderachse und mindestens eine Hinterachse aufweist, die je zwei Bodenverbindungen aufweisen, welche zu beiden Seiten der Mittelsymmetrieebene des Fahrzeugs angeordnet sind, wobei die Steuermittel die Verteilung der der Nickbewegung entgegenwirkenden Lageregelungskomponenten zu beiden Seiten der Mittelsymmetrieebene in Echtzeit steuern.

## Claims

1. Vehicle suspension comprising at least two links to the ground (1) each connecting a non-suspended mass comprising a wheel (2) to a suspended mass, with possible vertical deflection, each link to the ground comprising a vertical suspension reacting to the variations of distance between the suspended mass and the non-suspended mass, the said vertical suspension comprising a spring (4) and a reversible electric actuator (5) acting in parallel with the spring, the suspension comprising means for controlling a trim correction, the suspension comprising means for controlling each of the electric actuators of each of the said links to the ground so that they each develop a force, **characterised in that** each force consists of the addition of two components exclusively: a damping component opposing the deflection speed and determined individually for each link to the ground to which the electric actuator under consideration belongs and a trim correction component determined in a centralised manner by a control concerning the vehicle as a whole.

2. Suspension according to Claim 1, in which the means for controlling a trim correction comprise means for evaluating a non-vertical stress applied to the suspended mass and likely to bring about a trim variation of the vehicle, and in that the said trim correction components apply a trim correction torque to the suspended mass.

3. Suspension according to Claim 2, in which the said at least two links to the ground form an axle, the said links to the ground being mounted on either side of the median plane of symmetry of the vehicle, so that the said trim correction torque opposes the rolling.

4. Suspension according to Claim 2, in which the said at least two links to the ground comprise a front link to the ground and a rear link to the ground, so that the said trim correction torque opposes the pitching.

5. Suspension according to Claim 2, for a vehicle comprising at least four links to the ground forming a front axle and a rear axle, in which the said trim correction torque opposes both the rolling and the pitching.

6. Suspension according to one of Claims 1 to 5, in which the damping component is controlled in accordance with parameters indicating vehicle driving conditions.

7. Suspension according to one of Claims 1 to 6, in which the electric actuator (5) comprises an electric motor (52) of the automatically controlled synchronous type, with permanent magnets.

8. Suspension according to Claim 7, in which the control means determine the variation of the relative position between suspended point and non-suspended point entirely from a measurement of the variation of position delivered by the sensors integrated in the electric motor.

9. Suspension according to one of Claims 1 to 8, in which the means for evaluating a non-vertical stress comprise at least one sensor chosen from the group consisting of a sensor for the transverse acceleration of the said suspended mass, a yaw rate sensor, and a sensor for the longitudinal acceleration of the said suspended mass.

10. Suspension according to one of Claims 1 to 9, for a vehicle comprising at least one front axle and one rear axle each having two links to the ground mounted on either side of the median plane of symmetry of the vehicle, the said control means controlling the distribution between the front axle and the rear axle of the said trim correction components opposing the rolling in real time.

11. Suspension according to one of Claims 1 to 10, for a vehicle comprising at least one front axle and one rear axle each having two links to the ground mounted on either side of the median plane of symmetry of the vehicle, the said control means controlling the distribution on either side of the median plane of symmetry of the vehicle of the said correction components acting on the pitching in real time.
